(19) Europäisches Patentamt
European Patent Office
Office européen des brevets

(11) **EP 1 607 814 B1**

(12) **FASCICULE DE BREVET EUROPEEN**

(45) Date de publication et mention
de la délivrance du brevet:
**05.12.2007 Bulletin 2007/49**

(51) Int Cl.:
***G05D 1/00*** *(2006.01)*

(21) Numéro de dépôt: **05291177.3**

(22) Date de dépôt: **01.06.2005**

(54) **Procédé et dispositif pour détecter un dépassement de charges de dimensionnement de l'empennage horizontal arrière d'un avion**

Verfahren und Vorrichtung zur Ermittlung eines Überschreitens der Belastungsgrenzen eines Flugzeughöhenleitwerkes

Method and apparatus for detecting conditions in which aircraft horizontal tail load limitations are exceeded

(84) Etats contractants désignés:
**AT BE BG CH CY CZ DE DK EE ES FI FR GB GR HU IE IS IT LI LT LU MC NL PL PT RO SE SI SK TR**

(30) Priorité: **15.06.2004 FR 0406455**

(43) Date de publication de la demande:
**21.12.2005 Bulletin 2005/51**

(73) Titulaire: **AIRBUS France**
**31060 Toulouse (FR)**

(72) Inventeurs:
• **Delaplace, Franck**
**31300 Toulouse (FR)**
• **Marquier, Sylvie**
**31400 Toulouse (FR)**
• **Mathieu, Gérard**
**31820 Pibrac (FR)**
• **Squeglia, Gennaro**
**31770 Colomiers (FR)**

(74) Mandataire: **Hauer, Bernard**
**Cabinet Bonnétat**
**29, Rue de Saint-Pétersbourg**
**75008 Paris (FR)**

(56) Documents cités:
**GB-A- 2 192 723** **US-A- 4 302 745**
**US-A- 5 359 326**

EP 1 607 814 B1

**Description**

La présente invention concerne un procédé et un dispositif pour détecter un dépassement de charges de dimensionnement de l'empennage horizontal arrière d'un avion.

Par charges de dimensionnement, on entend, dans le cadre de la présente invention, les charges maximales que peuvent supporter les parties de structure prises en compte (à savoir l'empennage horizontal arrière) sans qu'il y ait apparition de déformations permanentes.

Dans un but évident de sécurité, une inspection de l'empennage horizontal arrière de l'avion, ainsi que la réparation d'éventuelles détériorations, doivent être effectuées, dès qu'il y a dépassement desdites charges de dimensionnement.

Une inspection de parties de structure de l'avion est généralement déclenchée à la suite de la génération par un calculateur de détection d'incident, par exemple du type FWC ("Flight Warning Computer" en anglais, c'est-à-dire "calculateur d'alarme de vol" en français), d'une alarme de dépassement de vitesse ("overspeed warning" en anglais)

En général, une telle alarme est engendrée lorsqu'un dépassement de plus de quatre noeuds d'une vitesse (Mach) maximale autorisée dépendant de la configuration actuelle de l'avion, est détecté.

Les différentes vitesses (Mach) maximales sont déterminées grâce à des modèles de charge spécifiques à chaque zone de l'avion, de manière à ce que les éléments constitutifs de l'avion ne subissent pas de charge structurale de nature à les endommager.

Un tel dépassement de vitesse (Mach) maximale peut se produire lors de manoeuvres inhabituelles, lors de la rencontre de turbulences importantes ou lors d'actions erronées de la part du pilote.

L'activation de cette alarme oblige la compagnie aérienne, conformément au manuel de maintenance, à effectuer une visite de maintenance de l'avion. Cette opération vise à vérifier la bonne tenue de la structure de l'avion aux charges rencontrées lors de l'excursion en vitesse (Mach) au-delà du domaine de vol.

Cette visite consiste à contrôler de façon visuelle que des criques/fissures ne se sont pas développées et/ou que des éléments structuraux ou attaches ne se sont pas déformés et à vérifier que les différents systèmes potentiellement touchés fonctionnent encore de façon normale.

De telles visites de maintenance immobilisent donc l'avion au sol, ce qui pénalise bien entendu la compagnie aérienne.

De plus, des informations statistiques provenant des compagnies aériennes font état d'une fréquence d'occurrence relativement importante de dépassement de vitesse. En fait, pour gagner des rotations, les compagnies aériennes demandent souvent à leurs pilotes de voler à des vitesses proches des vitesses maximales. En conséquence, une simple rafale de vent ou turbulence déclenche l'alarme, ce qui oblige alors la compagnie aérienne à effectuer la visite de maintenance telle que décrite dans le manuel de maintenance de l'avion.

Or, il apparaît que, dans une très grande majorité de cas, aucun dommage au niveau de la structure de l'avion de type criques, fissures, ... n'a été observé. Ainsi, il apparaît que le critère obligeant ou non à réaliser une visite de maintenance suite à une alarme de dépassement de vitesse du type précité, est excessif et mal adapté au besoin.

Un autre système permettant d'optimiser le nombre de visites techniques est décrit dans le document GB 2 192 723 et est considéré comme l'art antérieur le plus proche.

La présente invention a pour objet de remédier à ces inconvénients.

Elle concerne un procédé pour détecter sur un avion, de façon particulièrement efficace et fiable, tout dépassement de charges de dimensionnement de l'empennage horizontal arrière dudit aéronef, tout en évitant des inspections dudit empennage horizontal arrière visiblement non justifiées d'un point de vue technique.

A cet effet, selon l'invention, ledit procédé est remarquable en ce que :

A/ dans une étape préliminaire, on détermine une première enveloppe de sécurité représentant un graphique formé dans un plan à partir de couples de valeurs de moment de flexion et de moment de torsion de l'empennage horizontal arrière et définie de sorte que, pour tout couple de telles valeurs qui est situé hors de ladite première enveloppe de sécurité et qui est appliqué à l'avion, il existe un risque d'apparition de déformations permanentes sur l'empennage horizontal arrière ;

B/ au cours d'un vol de l'avion, on réalise de façon répétitive et automatique les étapes suivantes :

    a) on estime le moment de flexion courant ;
    b) on estime le moment de torsion courant ;
    c) on réalise une première comparaison en comparant le couple formé par ledit moment de flexion courant et ledit moment de torsion courant à ladite première enveloppe de sécurité ; et
    d) on détermine si une inspection structurale dudit empennage horizontal arrière doit être effectuée, au moins à partir du résultat de ladite première comparaison.

Une inspection structurale doit être mise en oeuvre lorsqu'un couple de moments de flexion et de torsion courants se trouve hors de ladite première enveloppe de sécurité.

Ainsi, grâce à la surveillance simultanée du moment de flexion et du moment de torsion de l'empennage horizontal arrière, par l'intermédiaire de ladite première enveloppe de sécurité, on obtient une évaluation affinée du niveau de charge auquel a été soumis ledit empennage horizontal arrière. Ceci permet de réduire de façon significative le nombre d'inspections (ou visites de maintenance) à déclencher concernant ledit empennage horizontal arrière et donc les inconvénients qui en découlent.

De plus, grâce à la prise en compte de ladite première enveloppe de sécurité :

- la surveillance est particulièrement efficace et simplifiée, puisque ladite première enveloppe de sécurité est formée au sol avant le vol ; et
- l'évaluation d'un éventuel dépassement de charges est très affinée, puisque l'on ne tient pas compte en général simplement d'une seule valeur maximale pour le moment de flexion et d'une seule valeur maximale pour le moment de torsion, mais d'un nombre élevé de couples de moment de flexion et de moment de torsion. Il peut toutefois arriver pour certains aéronefs qu'uniquement la valeur maximale pour le moment de flexion et la valeur maximale pour le moment de torsion soient surveillées.

De préférence, à l'étape préliminaire A/, on détermine ladite première enveloppe de sécurité à l'aide de modèles de charge de l'avion.

Dans un mode de réalisation particulier, à l'étape B/a), on détermine le moment de flexion courant Mx, à l'aide de l'expression suivante :

$$Mx = A1.\alpha + B1.\delta qd + C1.\delta qg + D1.ih + E1.nz.X + F1.nz + G1.q^2 + H1.dq/dt + I1$$

dans laquelle :

- A1, B1, C1, D1, E1, F1, G1, H1 et I1 sont des coefficients ;
- $\alpha$ est l'angle d'incidence de l'avion, au niveau de l'empennage horizontal arrière ;
- $\delta qd$ et $\delta qg$ sont les angles de débattement de gouvernes de profondeur, droite et gauche, de l'avion ;
- ih représente l'angle de braquage de l'empennage horizontal, défini par rapport à l'axe du fuselage de l'avion ;
- nz est le facteur de charge vertical, mesuré au centre de gravité de l'avion ;
- X représente la somme de la masse de l'empennage horizontal et de la masse de fuel ;
- q est la vitesse de tangage ;
- dq/dt représente l'accélération de tangage correspondant à la dérivée par rapport au temps t de la vitesse de tangage q.

Dans ce cas, avantageusement, lesdits coefficients A1, B1, C1, D1, E1, F1, G1, H1 et I1 dépendent de la pression dynamique, de la répartition massique (quantité de fuel, nombre de passagers, ...), du nombre de Mach de l'avion et de caractéristiques aérodynamiques longitudinales de l'avion.

Dans un mode de réalisation simplifié, lesdits coefficients G1 et H1 sont nuls. Ces coefficients G1 et H1 peuvent en effet être négligés, et ils sont uniquement utilisés lorsque l'on désire un calcul affiné du moment de flexion courant Mx.

En outre, dans un mode de réalisation préféré, à l'étape B/b), on détermine le moment de torsion courant My, à l'aide de l'expression suivante :

$$My = A2.\alpha + B2.\delta qd + C2.\delta qg + D2.ih + E2.nz.X + F2.nz + G2.q^2 + H2.dq/dt + I2$$

dans laquelle, en plus des paramètres précités, A2, B2, C2, D2, E2, F2, G2, H2 et I2 sont des coefficients.

Avantageusement, lesdits coefficients A2, B2, C2, D2, E2, F2, G2, H2 et I2 dépendent également de la pression dynamique, de la répartition massique (quantité de fuel, nombre de passagers, ...), du nombre de Mach de l'avion et de caractéristiques aérodynamiques longitudinales de l'avion.

Dans un mode de réalisation simplifié, lesdits coefficients G2 et H2 sont nuls. Ces coefficients G2 et H2 peuvent en effet être négligés, et ils sont uniquement utilisés lorsque l'on désire un calcul affiné du moment de torsion courant My.

En outre, de façon avantageuse, on détermine :

- les angles $\delta qd$ et $\delta qg$, à partir d'ordres de braquage correspondants ;

- le facteur de charge vertical nz et la vitesse de tangage g, à partir de mesures appropriées ; et
- les autres paramètres précités utilisés, tels que ih, g, ..., également à partir de mesures appropriées.

Par ailleurs, dans un mode de réalisation particulier :

- dans l'étape préliminaire A/, on détermine de plus une seconde enveloppe de sécurité représentant un graphique formé dans un plan à partir de couples de valeurs de moment de torsion et d'effort tranchant de l'empennage horizontal arrière et définie de sorte que, pour tout couple de telles valeurs qui est situé hors de ladite seconde enveloppe de sécurité et qui est appliqué à l'avion, il existe un risque d'apparition de déformations permanentes sur l'empennage horizontal arrière ; et
- au cours du vol de l'avion, on réalise de façon automatique les étapes suivantes :

  ■ on estime un effort tranchant courant ;
  ■ on réalise une seconde comparaison en comparant le couple formé par ledit moment de torsion courant et ledit effort tranchant courant à ladite seconde enveloppe de sécurité ; et
  ■ à l'étape d), on détermine si une inspection structurale dudit empennage horizontal arrière doit être effectuée, également à partir du résultat de ladite seconde comparaison.

Ce dernier mode de réalisation permet notamment de valider une inspection, demandée suite à la détection d'un dépassement de charges à l'aide de ladite première enveloppe de sécurité (surveillance des moments de flexion et de torsion). Dans un tel cas, ce dernier mode de réalisation est mis en oeuvre, de préférence, uniquement lorsque la première comparaison précitée conclut à un dépassement de charges. Bien entendu, il peut toutefois également être mis en oeuvre (en continu), en parallèle à la surveillance conjointe du moment de flexion et du moment de torsion.
De façon avantageuse, on détermine ledit effort tranchant Tz courant, à l'aide de l'expression suivante :

$$Tz = A3.\alpha + B3.\delta qd + C3.\delta qg + D3.ih + E3.nz.X + F3.nz + G3.q^2 + H3.dq/dt + I3$$

dans laquelle, en plus des paramètres précités, A3 à I3 sont des coefficients.
La présente invention concerne également un dispositif pour détecter un dépassement de charges de dimensionnement d'un empennage horizontal arrière d'un avion.
Selon l'invention, ledit dispositif est remarquable en ce qu'il comporte :

- un ensemble de sources d'informations ;
- des premiers moyens pour déterminer, à l'aide d'informations issues dudit ensemble de sources d'informations, un moment de flexion courant ;
- des deuxièmes moyens pour déterminer, à l'aide d'informations issues dudit ensemble de sources d'informations, un moment de torsion courant ;
- des troisièmes moyens pour réaliser une première comparaison, en comparant le couple formé par ledit moment de flexion courant et ledit moment de torsion courant à une première enveloppe de sécurité représentant un graphique formé dans un plan à partir de couples de valeurs de moment de flexion et de moment de torsion de l'empennage horizontal arrière et définie de sorte que, pour tout couple de telles valeurs qui est situé hors de ladite première enveloppe de sécurité et qui est appliqué à l'avion, il existe un risque d'apparition de déformations permanentes sur l'empennage horizontal arrière ; et
- des quatrièmes moyens pour déterminer si une inspection structurale dudit empennage horizontal arrière doit être effectuée, au moins à partir du résultat de ladite première comparaison.

Dans un mode de réalisation particulier :

- ledit dispositif comporte de plus :

  ■ des cinquièmes moyens pour déterminer, à l'aide d'informations issues dudit ensemble de sources d'informations, un effort tranchant courant ; et
  ■ des sixièmes moyens pour réaliser une seconde comparaison, en comparant le couple formé par ledit moment de torsion courant et ledit effort tranchant courant à une seconde enveloppe de sécurité ; et

- lesdits quatrièmes moyens déterminent si une inspection structurale dudit empennage horizontal arrière doit être effectuée, également à partir du résultat de ladite seconde comparaison.

En outre, avantageusement, le dispositif conforme à l'invention comporte de plus des septièmes moyens destinés à indiquer à un opérateur, le cas échéant, qu'une inspection de l'empennage horizontal arrière doit être effectuée.

L'unique figure du dessin annexé fera bien comprendre comment l'invention peut être réalisée. Cette figure est le schéma synoptique d'un dispositif conforme à l'invention.

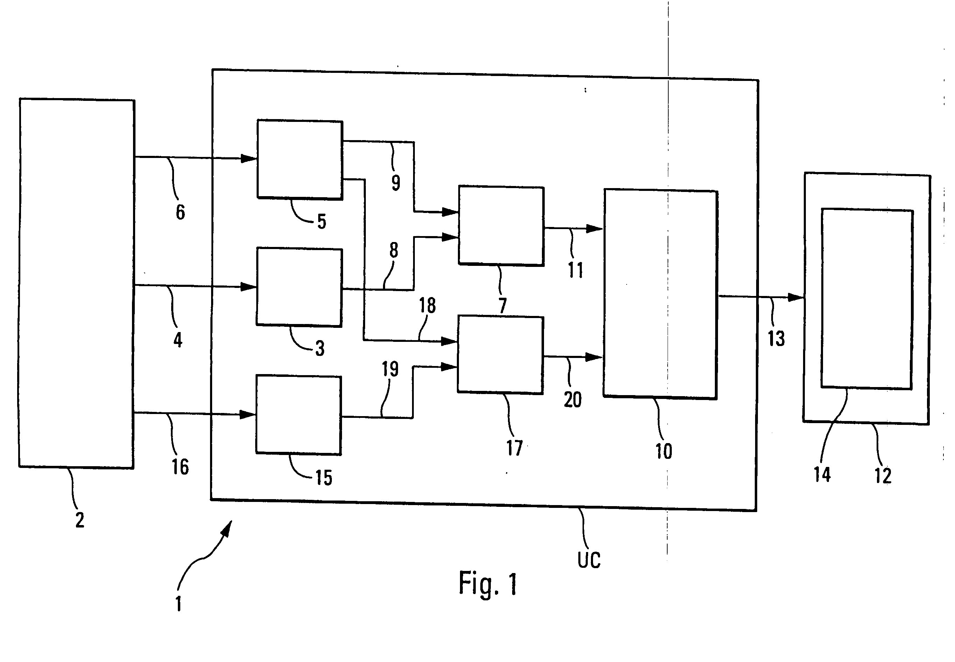

Le dispositif 1 conforme à l'invention et représenté schématiquement sur la figure 1 est destiné à détecter sur un avion non représenté, notamment un avion de transport, un dépassement de charges de dimensionnement de l'empennage horizontal arrière.

Pour ce faire, ledit dispositif 1 comporte, selon l'invention :

- un ensemble 2 de sources d'informations, précisées ci-dessous ;
- des moyens 3 qui sont reliés par une liaison 4 à l'ensemble 2 de sources d'informations, pour déterminer au cours d'un vol de l'avion un moment de flexion courant Mx ;
- des moyens 5 qui sont reliés par une liaison 6 à l'ensemble 2 de sources d'informations, pour déterminer au cours du vol de l'avion un moment de torsion courant My ;
- des moyens 7 qui sont reliés par des liaisons 8 et 9 respectivement auxdits moyens 3 et 5, pour réaliser une comparaison, à savoir pour comparer le couple C1 formé par ledit moment de flexion Mx courant et ledit moment de torsion My courant à une première enveloppe de sécurité E1. Cette première enveloppe de sécurité E1 non représentée :

  ■ est déterminée au sol, par exemple en préparation de mission ;
  ■ représente un graphique formé dans un plan à partir de couples de valeurs de moment de flexion et de moment de torsion de l'empennage horizontal arrière ;
  ■ est définie de sorte que, pour tout couple (de telles valeurs de moment de flexion et de moment de torsion) qui est situé hors de ladite première enveloppe de sécurité E1 et qui est appliqué à l'avion, il existe un risque d'apparition de déformations permanentes sur l'empennage horizontal arrière ;
  ■ est déterminée à l'aide de modèles de charges usuels de l'avion ; et
  ■ est, par exemple, enregistrée dans lesdits moyens 7 ; et

- des moyens 10 qui sont reliés par une liaison 11 auxdits moyens 7, pour déterminer si une inspection structurale dudit empennage horizontal arrière doit être effectuée, au moins à partir du résultat de la comparaison réalisée par lesdits moyens 7.

Lesdits moyens 3, 5, 7 et 10 qui sont par exemple regroupés dans une unité de calcul UC mettent en oeuvre les calculs précités de façon automatique et répétitive, au cours d'un vol de l'avion.

Dans un mode de réalisation préféré, lesdits moyens 3 déterminent ledit moment de flexion courant Mx, à l'aide de l'expression suivante :

$$Mx = A1.\alpha + B1.\delta qd + C1.\delta qg + D1.ih + E1.nz.X + F1.nz + G1.q^2 + H1.dq/dt + I1$$

dans laquelle :

- A1, B1, C1, D1, E1, F1, G1, H1 et I1 sont des coefficients ;
- $\alpha$ est l'angle d'incidence de l'avion, au niveau de l'empennage horizontal arrière ;
- $\delta qd$ et $\delta qg$ sont les angles de débattement de gouvernes de profondeur, droite et gauche, de l'avion ;
- ih représente l'angle de braquage de l'empennage horizontal, défini par rapport à l'axe du fuselage de l'avion ;
- nz est le facteur de charge vertical, mesuré au centre de gravité de l'avion ;
- X représente la somme de la masse de l'empennage horizontal et de la masse de fuel ;
- q est la vitesse de tangage ;
- dq/dt représente l'accélération de tangage correspondant à la dérivée par rapport au temps t de la vitesse de tangage g.

Lesdits coefficients A1, B1, C1, D1, E1, F1, G1, H1 et I1 dépendent de la pression dynamique, de la répartition massique (quantité de fuel, nombre de passagers, ...), du nombre de Mach de l'avion et de caractéristiques aérodynamiques longitudinales (efficacité de gouverne, effet de non-linéarité, couplage empennage horizontal et empennage vertical, ...) de l'avion. Ces coefficients peuvent être enregistrés, par exemple sous forme de tableaux, dans lesdits moyens 3.

Dans un mode de réalisation simplifié, lesdits coefficients G1 et H1 sont nuls. Ces coefficients G1 et H1 peuvent en effet être négligés. De préférence, ils sont uniquement utilisés lorsque l'on désire un calcul affiné du moment de flexion courant Mx.

De plus, grâce audit ensemble 2 de sources d'informations, on détermine :

- les angles $\delta qd$ et $\delta qg$, à partir d'ordres de braquage correspondants ;
- le facteur de charge vertical nz et la vitesse de tangage g, à partir de mesures appropriées ; et
- les autres paramètres précités utilisés, tels que ih, $\underline{q}$, ..., également à partir de mesures appropriées.

Par ailleurs, lesdits moyens 5 déterminent le moment de torsion courant My, à l'aide de l'expression suivante :

$$My = A2.\alpha + B2.\delta qd + C2.\delta qg + D2.ih + E2.nz.X + F2.nz + G2.q^2 + H2.dq/dt + I2$$

dans laquelle A2, B2, C2, D2, E2, F2, G2, H2 et I2 sont des coefficients.

De même que les coefficients A1 à I1, lesdits coefficients A2 à I2 dépendent de la pression dynamique, de la répartition massique (quantité de fuel, nombre de passagers, ...), du nombre de Mach de l'avion et de caractéristiques aérodynamiques longitudinales (efficacité de gouverne, effet de non-linéarité, couplage empennage horizontal et empennage vertical, ...) de l'avion.

Dans un mode de réalisation simplifié, les coefficients G2 et H2 sont nuls. Ces coefficients G2 et H2 peuvent en effet être négligés. De préférence, ils sont uniquement utilisés lorsque l'on désire un calcul affiné du moment de torsion courant My.

Ainsi, grâce à la surveillance simultanée du moment de flexion Mx et du moment de torsion My de l'empennage horizontal arrière (par l'intermédiaire de ladite première enveloppe de sécurité E1), qui est mise en oeuvre par le dispositif 1 conforme à l'invention, on obtient une évaluation affinée du niveau de charge auquel a été soumis ledit empennage horizontal arrière. Ceci permet de réduire de façon significative le nombre d'inspections (ou visites de maintenance) à déclencher concernant ledit empennage horizontal arrière et donc les inconvénients qui en découlent.

De plus, grâce à la prise en compte de ladite première enveloppe de sécurité E1 :

- la surveillance est particulièrement efficace et simplifiée, puisque ladite première enveloppe de sécurité E1 est formée au sol avant le vol ; et
- l'évaluation d'un éventuel dépassement de charges est très affinée, puisque l'on ne tient pas compte en général simplement d'une seule valeur maximale pour le moment de flexion et d'une seule valeur maximale pour le moment de torsion, mais d'un nombre élevé de couples de moment de flexion et de moment de torsion (qui définissent ladite première enveloppe de sécurité E1).

Le dispositif 1 conforme à l'invention comporte également des moyens 12 qui sont reliés par une liaison 13 auxdits moyens 10 et qui sont destinés à indiquer à un opérateur, par exemple un opérateur de maintenance ou un pilote de l'avion, le cas échéant, qu'une inspection de l'empennage horizontal arrière doit être effectuée. Ces moyens 12 peuvent notamment comporter des moyens d'affichage permettant d'afficher sur un écran de visualisation 14 les indications précitées. Ils peuvent également comporter des moyens d'impression et/ou des moyens d'alarme, par exemple, de type sonore et/ou de type visuel, qui sont notamment montés dans le poste de pilotage de l'avion.

On notera qu'une telle alarme peut être conservée dans un enregistreur de maintenance, afin que les équipes de maintenance prennent connaissance du déroulement du vol et sachent quelle(s) opération(s) de maintenance elles doivent effectuer. De plus, il est possible de prévenir par avance les équipes de maintenance pour qu'elles soient prêtes à intervenir dès l'atterrissage de l'avion.

Par ailleurs, dans un mode de réalisation particulier :

- ledit dispositif 1 comporte de plus :

  ■ des moyens 15 qui sont reliés par une liaison 16 audit ensemble 2 de sources d'informations, pour déterminer un effort tranchant Tz courant ; et
  ■ des moyens 17 qui sont reliés par des liaisons 18 et 19 respectivement auxdits moyens 5 et 15, pour réaliser une comparaison, à savoir pour comparer le couple C2 formé par ledit moment de torsion My courant et ledit effort tranchant Tz courant à une seconde enveloppe de sécurité E2. Cette seconde enveloppe de sécurité E2 non représentée :

* est également déterminée au sol, par exemple en préparation de mission ;
* représente un graphique formé dans un plan à partir de couples de valeurs de moment de torsion et d'effort tranchant de l'empennage horizontal arrière ;
* est définie de sorte que, pour tout couple (de telles valeurs de moment de torsion et d'effort tranchant) qui est situé hors de ladite seconde enveloppe de sécurité E2 et qui est appliqué à l'avion, il existe un risque d'apparition de déformations permanentes sur l'empennage horizontal arrière ;
* est déterminée à l'aide de modèles de charges usuels de l'avion ; et
* est, par exemple, enregistrée dans lesdits moyens 17 ; et

- lesdits moyens 10 qui sont reliés par une liaison 20 auxdits moyens 17, déterminent si une inspection structurale dudit empennage horizontal arrière doit être effectuée, également à partir du résultat de la comparaison réalisée par lesdits moyens 17.

Dans un mode de réalisation particulier, lesdits moyens 15 déterminent ledit effort tranchant Tz courant, à l'aide de l'expression suivante :

$$Tz = A3.\alpha + B3.\delta qd + C3.\delta qg + D3.ih + E3.nz.X + F3.nz + G3.q^2 + H3.dq/dt + I3$$

 dans laquelle A3, B3, C3, D3, E3, F3, G3, H3 et I3 sont des coefficients.
De même que les coefficients A1 à I1, lesdits coefficients A3 à I3 dépendent de la pression dynamique, de la répartition massique (quantité de fuel, nombre de passagers, ...), du nombre de Mach de l'avion et de caractéristiques aérodynamiques longitudinales (efficacité de gouverne, effet de non-linéarité, couplage empennage horizontal et empennage vertical, ...) de l'avion.
Dans un mode de réalisation simplifié, les coefficients G3 et H3 sont nuls. Ces coefficients G3 et H3 peuvent en effet être négligés. De préférence, ils sont uniquement utilisés lorsque l'on désire un calcul affiné de l'effort tranchant courant Tz.
Ce dernier mode de réalisation permet notamment de valider une inspection, demandée suite à la détection d'un dépassement de charges à l'aide de ladite première enveloppe de sécurité E1 (moments de flexion et de torsion). Dans un tel cas, ce dernier mode de réalisation est mis en oeuvre, de préférence, uniquement lorsque la comparaison mise en oeuvre par les moyens 17 conclut à un dépassement de charges. Bien entendu, ce dernier mode de réalisation peut toutefois également être mis en oeuvre en parallèle à la surveillance conjointe du moment de flexion Mx et du moment de torsion My.

**Revendications**

1.  Procédé pour détecter un dépassement de charges de dimensionnement de l'empennage horizontal arrière d'un avion, selon lequel :

A/ dans une étape préliminaire, on détermine une première enveloppe de sécurité représentant un graphique formé dans un plan à partir de couples de valeurs de moment de flexion et de moment de torsion de l'empennage horizontal arrière et définie de sorte que, pour tout couple de telles valeurs qui est situé hors de ladite première enveloppe de sécurité et qui est appliqué à l'avion, il existe un risque d'apparition de déformations permanentes sur l'empennage horizontal arrière ;
B/ au cours d'un vol de l'avion, on réalise de façon répétitive et automatique les étapes suivantes :

a) on estime le moment de flexion courant ;
b) on estime le moment de torsion courant ;
c) on réalise une première comparaison en comparant le couple formé par ledit moment de flexion courant et ledit moment de torsion courant à ladite première enveloppe de sécurité ; et
d) on détermine si une inspection structurale dudit empennage horizontal arrière doit être effectuée, au moins à partir du résultat de ladite première comparaison.

2.  Procédé selon la revendication 1,

**caractérisé en ce qu'**à l'étape d), on émet une alarme dans le poste de pilotage de l'avion, si une inspection structurale dudit empennage horizontal arrière doit être effectuée.

3. Procédé selon l'une des revendications 1 et 2,
**caractérisé en ce qu'**à l'étape préliminaire A/, on détermine ladite première enveloppe de sécurité à l'aide de modèles de charge de l'avion.

4. Procédé selon l'une des revendications 1 à 3,
**caractérisé en ce qu'**à l'étape B/a), on détermine ledit moment de flexion courant Mx, à l'aide de l'expression suivante :

$$Mx = A1.\alpha + B1.\delta qd + C1.\delta qg + D1.ih + E1.nz.X + F1.nz + G1.q^2 + H1.dq/dt + I1$$

dans laquelle :

- A1, B1, C1, D1, E1, F1, G1, H1 et I1 sont des coefficients ;
- $\alpha$ est l'angle d'incidence de l'avion, au niveau de l'empennage horizontal arrière ;
- $\delta qd$ et $\delta qg$ sont les angles de débattement de gouvernes de profondeur, droite et gauche, de l'avion;
- ih représente l'angle de braquage de l'empennage horizontal, défini par rapport à l'axe du fuselage de l'avion ;
- nz est le facteur de charge vertical, mesuré au centre de gravité de l'avion ;
- X représente la somme de la masse de l'empennage horizontal et de la masse de fuel ;
- q est la vitesse de tangage ;
- dq/dt représente l'accélération de tangage correspondant à la dérivée par rapport au temps <u>t</u> de la vitesse de tangage <u>q</u>.

5. Procédé selon la revendication 4,
**caractérisé en ce que** lesdits coefficients A1, B1, C1, D1, E1, F1, G1, H1 et I1 dépendent de la pression dynamique, de la répartition massique, du nombre de Mach de l'avion et de caractéristiques aérodynamiques longitudinales de l'avion.

6. Procédé selon l'une des revendications 4 et 5,
**caractérisé en ce que** lesdits coefficients G1 et H1 sont nuls.

7. Procédé selon l'une quelconque des revendications précédentes,
**caractérisé en ce qu'**à l'étape B/b), on détermine ledit moment de torsion courant My, à l'aide de l'expression suivante :

$$My = A2.\alpha + B2.\delta qd + C2.\delta qg + D2.ih + E2.nz.X + F2.nz + G2.q^2 + H2.dq/dt + I2$$

dans laquelle :

- A2, B2, C2, D2, E2, F2, G2, H2 et I2 sont des coefficients ;
- $\alpha$ est l'angle d'incidence de l'avion, au niveau de l'empennage horizontal arrière ;
- $\delta qd$ et $\delta qg$ sont les angles de débattement de gouvernes de profondeur, droite et gauche, de l'avion ;
- ih représente l'angle de braquage de l'empennage horizontal, défini par rapport à l'axe du fuselage de l'avion ;
- nz est le facteur de charge vertical, mesuré au centre de gravité de l'avion ;
- X représente la somme de la masse de l'empennage horizontal et de la masse de fuel ;
- q est la vitesse de tangage ;
- dq/dt représente l'accélération de tangage correspondant à la dérivée par rapport au temps <u>t</u> de la vitesse de tangage <u>q</u>.

8. Procédé selon la revendication 7,
**caractérisé en ce que** lesdits coefficients A2, B2, C2, D2, E2, F2, G2, H2 et I2 dépendent de la pression dynamique, de la répartition massique, du nombre de Mach de l'avion et de caractéristiques aérodynamiques longitudinales de l'avion.

9. Procédé selon l'une des revendications 7 et 8,
**caractérisé en ce que** lesdits coefficients G2 et H2 sont nuls.

10. Procédé selon l'une quelconque des revendications précédentes,
**caractérisé en ce que** :

- dans l'étape préliminaire A/, on détermine de plus une seconde enveloppe de sécurité représentant un graphique formé dans un plan à partir de couples de valeurs de moment de torsion et d'effort tranchant de l'empennage horizontal arrière et définie de sorte que, pour tout couple de telles valeurs qui est situé hors de ladite seconde enveloppe de sécurité et qui est appliqué à l'avion, il existe un risque d'apparition de déformations permanentes sur l'empennage horizontal arrière ; et
- au cours du vol de l'avion, on réalise de façon automatique les étapes suivantes :

■ on estime un effort tranchant courant ;
■ on réalise une seconde comparaison en comparant le couple formé par ledit moment de torsion courant et ledit effort tranchant courant à ladite seconde enveloppe de sécurité ; et
■ à l'étape d), on détermine si une inspection structurale dudit empennage horizontal arrière doit être effectuée, également à partir du résultat de ladite seconde comparaison.

11. Procédé selon la revendication 10,
**caractérisé en ce que** l'on détermine ledit effort tranchant Tz courant, à l'aide de l'expression suivante :

$$Tz = A3.\alpha + B3.\delta qd + C3.\delta qg + D3.ih + E3.nz.X + F3.nz + G3.q^2 + H3.dq/dt + I3$$

dans laquelle :

- A3, B3, C3, D3, E3, F3, G3, H3 et I3 sont des coefficients ;
- $\alpha$ est l'angle d'incidence de l'avion, au niveau de l'empennage horizontal arrière ;
- $\delta qd$ et $\delta qg$ sont les angles de débattement de gouvernes de profondeur, droite et gauche, de l'avion ;
- ih représente l'angle de braquage de l'empennage horizontal, défini par rapport à l'axe du fuselage de l'avion ;
- nz est le facteur de charge vertical, mesuré au centre de gravité de l'avion ;
- X représente la somme de la masse de l'empennage horizontal et de la masse de fuel ;
- q est la vitesse de tangage ;
- dq/dt représente l'accélération de tangage correspondant à la dérivée par rapport au temps t de la vitesse de tangage q.

12. Dispositif pour détecter un dépassement de charges de dimensionnement d'un empennage horizontal arrière d'un avion comportant :

- un ensemble (2) de sources d'informations ;
- des premiers moyens (3) pour déterminer, à l'aide d'informations issues dudit ensemble (2) de sources d'informations, un moment de flexion courant ;
- des deuxièmes moyens (5) pour déterminer, à l'aide d'informations issues dudit ensemble (2) de sources d'informations, un moment de torsion courant ;
- des troisièmes moyens (7) pour réaliser une première comparaison, en comparant le couple formé par ledit moment de flexion courant et ledit moment de torsion courant à une première enveloppe de sécurité représentant un graphique formé dans un plan à partir de couples de valeurs de moment de flexion et de moment de torsion de l'empennage horizontal arrière et définie de sorte que, pour tout couple de telles valeurs qui est situé hors de ladite première enveloppe de sécurité et qui est appliqué à l'avion, il existe un risque d'apparition de déformations permanentes sur l'empennage horizontal arrière ; et
- des quatrièmes moyens (10) pour déterminer si une inspection structurale dudit empennage horizontal arrière doit être effectuée, au moins à partir du résultat de ladite première comparaison.

13. Dispositif selon la revendication 12,

**caractérisé en ce que :**

- ledit dispositif (1) comporte de plus :

■ des cinquièmes moyens (15) pour déterminer, à l'aide d'informations issues dudit ensemble (2) de sources d'informations, un effort tranchant courant ; et
■ des sixièmes moyens (17) pour réaliser une seconde comparaison, en comparant le couple formé par ledit moment de torsion courant et ledit effort tranchant courant à une seconde enveloppe de sécurité ; et

- lesdits quatrièmes moyens (10) déterminent si une inspection structurale dudit empennage horizontal arrière doit être effectuée, également à partir du résultat de ladite seconde comparaison.

**14.** Dispositif selon l'une des revendications 12 et 13,
**caractérisé en ce qu**'il comporte de plus des septièmes moyens (12) destinés à indiquer à un opérateur, le cas échéant, qu'une inspection de l'empennage horizontal arrière doit être effectuée.

**Claims**

**1.** A method for detecting an overstepping of design loads of the tailplane of an aircraft, according to which :

A/ in a preliminary step, a first safety envelope is determined representing a chart formed in a plane on the basis of pairs of values of bending moment and of twisting moment of the tailplane and defined so that, for any pair of such values which lies outside said first safety envelope and which is applied to the aircraft, there exists a risk of appearance of permanent deformations on the tailplane;
B/ in the course of a flight of the aircraft, the following- steps are carried out repetitively and automatically:

a) the current bending moment is estimated;
b) the current twisting moment is estimated;
c) a first comparison is carried out by comparing the pair formed by said current bending moment and said current twisting moment with said first safety envelope; and
d) one determines whether a structural inspection of said tailplane has to be performed, at least on the basis of the result of said first comparison.

**2.** The method as claimed in Claim 1,
**characterized in that** in step d), an alarm is emitted in the flight control deck of the aircraft, if a structural inspection of said tailplane has to be performed.

**3.** The method as claimed in one of Claims 1 and 2,
**characterized in that** in preliminary step A/, said first safety envelope is determined with the aid of load models of the aircraft.

**4.** The method as claimed in one of Claims 1 to 3,
**characterized in that** in step B/a), said current bending moment Mx is determined with the aid of the following expression:

$$Mx=A1.\alpha+B1.\delta qd+C1.\delta qg+D1.ih+E1.nz.X+F1.nz+G1.q^2+H1.dq/dt+I1$$

in which:

- A1, B1, C1, D1, E1, F1, G1, H1 and I1 are coefficients;
- $\alpha$ is the angle of incidence of the aircraft, at the level of the tailplane;
- $\delta qd$ and $\delta qg$ are the angles of swing of elevators, right-and left, of the aircraft;
- ih represents the angle of deflection of the tailplane, defined with respect to the axis of the fuselage of the aircraft;
- nz is the vertical load factor, measured at the center of gravity of the aircraft ;
- X represents the sum of the mass of the tailplane and of the mass of fuel;

- q is the pitch rate;
- dq/dt represents the pitch acceleration corresponding to the derivative with respect to time $\underline{t}$ of the pitch rate $\underline{q}$.

5. The method as claimed in Claim 4,
   **characterized in that** said coefficients A1, B1, C1, D1, E1, F1, G1, H1 and I1 depend on the dynamic pressure, on the- mass distribution, on the Mach number of the aircraft and on longitudinal aerodynamic characteristics of the aircraft.

6. The method as claimed in one of Claims 4 and 5,
   **characterized in that** said coefficients G1 and H1 are zero.

7. The method as claimed in any one of the preceding Claims,
   **characterized in that** in step B/b), said current twisting moment My is determined with the aid of the following expression:

$$My=A2.\alpha+B2.\delta qd+C2.\delta qg+D2.ih+E2.nz.X+F2.nz+G2.q^2+H2.dq/dt+I2$$

in which:

   - A2, B2, C2, D2, E2, F2, G2, H2 and I2 are coefficients;
   - $\alpha$ is the angle of incidence of the aircraft, at the level of the tailplane;
   - $\delta qd$ and $\delta qg$ are the angles of swing of elevators, right and left, of the aircraft;
   - ih represents the angle of deflection of the tailplane, defined with respect to the axis of the fuselage of the aircraft;
   - nz is the vertical load factor, measured at the center of gravity of the aircraft;
   - X represents the sum of the mass of the tailplane and of the mass of fuel;
   - q is the pitch rate;
   - dq/dt represents the pitch acceleration corresponding to the derivative with respect to time $\underline{t}$ of the pitch rate $\underline{q.}$

8. The method as claimed in Claim 7,
   **characterized in that** said coefficients A2, B2, C2, D2, E2, F2, G2, H2 and I2 depend on the dynamic pressure, on the mass distribution, on the Mach number of the aircraft and on longitudinal aerodynamic characteristics of the aircraft.

9. The method as claimed in one of Claims 7 and 8,
   **characterized in that** said coefficients G2 and H2 are zero.

10. The method as claimed in any one of the preceding claims,
    **characterized in that**:

    - in preliminary step A/, a second safety envelope is moreover determined representing a chart formed in a plane on the basis of pairs of values of twisting moment and of shearing stress of the tailplane and defined so that, for any pair of such values which lies outside said second safety envelope and which is applied to the aircraft, there exists a risk of appearance of permanent deformations on the tailplane; and
    - in the course of the flight of the aircraft, the following steps are carried out automatically:

      . a current shearing stress is estimated;
      . a second comparison is carried out by comparing the pair formed by said current twisting moment and said current shearing stress with said second safety envelope; and
      . in step d), one determines whether a structural inspection of said tailplane has to be performed, likewise on the basis of the result of said second comparison.

11. The method as claimed in Claim 10,
    **characterized in that** said current shearing stress Tz is determined with the aid of the following expression:

$$Tz=A3.\alpha+B3.\delta qd+C3.\delta qg+D3.ih+E3.nz.X+F3.nz+G3.q^2+H3.dq/dt+I3$$

in which:

- A3, B3, C3, D3, E3, F3, G3, H3 and I3 are coefficients;
- $\alpha$ is the angle of incidence of the aircraft, at the level of the tailplane;
- $\delta qd$ and $\delta qg$ are- the angles of swing of elevators, right and left, of the aircraft;
- ih represents the angle of deflection of the tailplane, defined with respect to the axis of the fuselage of the- aircraft;
- nz is the vertical load factor, measured at the center of gravity of the aircraft;
- X represents the sum of the mass of the tailplane and of the mass of fuel;
- q is the pitch rate;
- dq/dt represents the pitch acceleration corresponding to the derivative with respect to time $\underline{t}$ of the pitch rate $\underline{q}$.

**12.** A device for detecting an overstepping of design loads of a tailplane of an aircraft, which device comprises:

  - a set (2) of information sources;
  - first means (3) for determining, with the aid of information emanating from said set (2) of information sources, a current bending moment;
  - second means (5) for determining, with the aid of information emanating from said set (2) of information sources, a current twisting moment;
  - third means (7) for carrying out a first comparison, by comparing the pair formed by said current bending moment and said current twisting moment with a first safety envelope representing a chart formed in a plane on the basis of pairs of values of bending moment and of twisting moment of the tailplane and defined so that, for any pair of such values which lies outside said first safety envelope and which is applied to the aircraft, there exists a risk of appearance of permanent deformations on the tailplane; and
  - fourth means (10) for determining whether a structural inspection of said tailplane has to be performed, at least on the basis of said first comparison.

**13.** The device as claimed in Claim 12,
  **characterized in that**:

  - said device (1) furthermore comprises:

    · fifth means (15) for determining, with the aid of information emanating from said set (2) of information sources, a current shearing stress; and
    · sixth means (17) for carrying out a second comparison, by comparing the pair formed by said current twisting moment and said current shearing stress with a second safety envelope; and

  - said fourth means (10) determine whether a structural inspection of said tailplane has to be performed, likewise on the basis of the result of said second comparison.

**14.** The device as claimed in one of Claims 12 and 13, **characterized in that** it furthermore comprises seventh means (12) intended to indicate to an operator, as appropriate, that an inspection of the tailplane has to be performed.

**Patentansprüche**

**1.** Verfahren zur Ermittlung eines Überschreitens der Belastungsgrenzen eines Flugzeughöhenleitwerks, bei dem:

  A/ in einem vorgelagerten Schritt eine erste Sicherheitseinhüllende bestimmt wird, die eine aus Paaren von Biegemoment-Werten und Torsionsmoment-Werten des Flugzeughöhenleitwerks in einer Ebene gebildete Grafik repräsentiert und die so definiert ist, dass für jedes Paar solcher Werte, das außerhalb der ersten Sicherheitseinhüllenden liegt und das auf das Flugzeug wirkt, eine Gefahr des Auftretens von bleibenden Verformungen am Höhenleitwerk besteht;
  B/im Verlauf eines-Fluges des Flugzeugs die folgenden Schritte wiederholt und automatisch durchgeführt werden:

    a) das aktuelle Biegemoment wird berechnet;
    b) das aktuelle Torsionsmoment wird berechnet;

c) ein erster Vergleich wird durchführt, indem das von dem aktuellen Biegemoment und dem aktuellen Torsionsmoment gebildete Paarmit der ersten Sicherheitseinhüllenden verglichen wird; und

d) es wird bestimmt, ob zumindest ausgehend von dem Ergebnis des ersten Vergleichs eine Strukturinspektion des Flugzeughöhenleitwerks durchgeführt werden muss.

2. Verfahren nach Anspruch 1,
**dadurch gekennzeichnet, dass** in Schritt d) im Cockpit des Flugzeugs ein Alarm abgegeben wird, wenn eine Strukturinspektion des Flugzeughöhenleitwerks durchgeführt werden muss.

3. Verfahren nach einem der Ansprüche 1 und 2,
**dadurch gekennzeichnet, dass** in dem vorgelagerten Schritt A/ die erste Sicherheitseinhüllende mithilfe von Lastmodellen des Flugzeugs bestimmt wird.

4. Verfahren nach einem der Ansprüche 1 bis 3,
**dadurch gekennzeichnet, dass** in Schritt B/a) das-aktuelle Biegemoment Mx mithilfe des folgenden Ausdrucks bestimmt wird:

$$Mx=A1.\alpha+B1.\delta qd+C1.\delta qg+D1.ih+E1.nz.X+F1.nz+G1.q^2+H1.dq/dt+I1$$

in dem:

- A1, B1, C1, D1, E1, F1, G1, H1und I1 Koeffizienten sind;
- $\alpha$ der Anstellwinkel des Flugzeugs am Höhenleitwerk ist;
- $\delta$qd und $\delta$qg die Ausschlagwinkel des linken und rechten Höhenruders des Flugzeugs sind;
- ih der Ausschlagwinkel des Höhenleitwerks bezogen auf die Flugzeugrumpfachse ist;
- nz das im Schwerpunkt des Flugzeugs gemessene vertikale Lastvielfache ist;
- X die Summe aus der Masse des Höhenleitwerks und der Kraftstoffmasse ist;
- q die Nickgeschwindigkeit ist;
- dq/dt die Nickbeschleunigung repräsentiert, die der Ableitung nach der Zeit t der Nickgeschwindigkeit g entspricht;

5. Verfahren nach Anspruch 4,
**dadurch gekennzeichnet, dass** die Koeffizienten A1, B1, C1, D1, E1, F1, G1, H1 und I1 von dem dynamischen Druck, der Massenverteilung, der Mach-Zahl des Flugzeugs und von longitudinalen aerodynamischen Merkmalen des Flugzeugs abhängen.

6. Verfahren- nach einem der Ansprüche 4 und 5,
**dadurch gekennzeichnet, dass** die Koeffizienten G1 und H1 null sind.

7. Verfahren nach einem der vorhergehenden Ansprüche,
**dadurch gekennzeichnet, dass** in Schritt B/a) das aktuelle Torsionsmoment My mithilfe des folgenden Ausdrucks bestimmt wird:

$$My=A2.\alpha+B2.\delta qd+C2.\delta qg+D2.ih+E2.nz.X+F2.nz+G2.q^2+H2.dq/dt+I2$$

in dem:

- A2, B2, C2, D2, E2, F2, G2, H2und I2 Koeffizienten sind;
- $\alpha$ der Anstellwinkel des Flugzeugs am Höhenleitwerk ist;
- $\delta$qd und $\delta$qg die Ausschlagwinkel des linken und rechten Höhenruders des Flugzeugs sind;
- ih der Ausschlagwinkel des Höhenleitwerks bezogen auf die Flugzeugrumpfachse ist;
- nz das im Schwerpunkt des Flugzeugs gemessene vertikale Lastvielfache ist;
- X die Summe aus der Masse des Höhenleitwerks und der Kraftstoffmasse ist;
- q die Nickgeschwindigkeit ist;

- dq/dt die Nickbeschleunigung repräsentiert, die der Ableitung nach der Zeit t der Nickgeschwindigkeit q entspricht;

8. Verfahren nach Anspruch 7,
**dadurch gekennzeichnet, dass** die Koeffizienten A2, B2, C2, D2, E2, F2, G2, H2 und I2 von dem dynamischen Druck, der Massenverteilung, der Mach-Zahl des Flugzeugs und von longitudinalen aerodynamischen Merkmalen des Flugzeugs abhängen.

9. Verfahren nach einem der Ansprüche 7 und 8,
**dadurch gekennzeichnet, dass** die Koeffizienten G2 und H2 null sind.

10. Verfahren nach einem der vorhergehenden Ansprüche,
**dadurch gekennzeichnet, dass**:

- in dem vorgelagerten Schritt A/ außerdem eine zweite Sicherheitseihhüllende bestimmt, die eine aus Paaren von Torsionsmoment-Werten und Schubbeanspruchungs-Werten des Höhenleitwerks in einer Ebene gebildete Grafik repräsentiert und die so definiert ist, dass für jedes Paar solcher Werte, das außerhalb der zweiten Sicherheitseinhüllenden liegt und das auf das Flugzeug wirkt, eine Gefahr des Auftretens von-bleibenden Verformungen am Höhenleitwerk besteht; und
- im Verlauf des-Fluges des Flugzeugs die folgenden Schritte automatisch durchgeführt werden:

■ eine aktuelle Schubbeanspruchung wird berechnet;
■ ein zweiter Vergleich wird durchgeführt, indem das von dem aktuellen Torsionsmoment und der aktuellen Schubbeanspruchung gebildete Paar mit der zweiten Sicherheitseinhüllenden verglichen wird und
■ in Schritt d) wird bestimmt, ob auch ausgehend von dem Ergebnis des zweiten Vergleichs eine Strukturinspektion des Flugzeughöhenleitwerks durchgeführt werden muss.

11. Verfahren nach Anspruch 10,
**dadurch gekennzeichnet, dass** die aktuelle Schubbeanspruchung Tz mithilfe des folgenden Ausdrucks bestimmt wird:

$$Tz = A3.\alpha + B3.\delta qd + C3.\delta qg + D3.ih + E3.nz.X + F3.nz + G3.q^2 + H3.dq/dt + I3$$

in dem:

- A3, B3, C3, D3, E3, F3, G3, H3 und I3-Koeffizienten sind;
- $\alpha$ der Anstellwinkel des Flugzeugs am Höhenleitwerk ist;
- $\delta qd$ und $\delta qg$ die Ausschlagwinkel des linken und rechten Höhenruders des Flugzeugs sind;
- ih den Ausschlagwinkel des Höhenleitwerks bezogen auf die Flugzeugrumpfachse repräsentiert;
- nz das im Schwerpunkt des Flugzeugs gemessene vertikale Lastvielfache ist;
- X die Summe aus der Masse des Höhenleitwerks und der Kraftstoffmasse repräsentiert;
- q die Nickgeschwindigkeit ist;
- dq/dt die Nickbeschleunigung repräsentiert, die der Ableitung nach der Zeit t der Nickgeschwindigkeit g entspricht;

12. Vorrichtung zur Ermittlung eines Überschreitens der Belastungsgrenzen eines Flugzeughöhenleitwerks mit:

- einer Gruppe (2) von Informationsquellen;
- ersten Mitteln (3) zum Bestimmen eines aktuellen Biegemoments mithilfe von Informationen aus der Gruppe (2) von Informationsquellen;
- zweiten Mitteln (5) zum Bestimmen eines aktuellen Torsionsmoments mithilfe von Informationen aus der Gruppe (2) von Informationsquellen;
- dritten Mitteln (7) zum Durchführen eines ersten Vergleichs, indem das von dem aktuellen Biegemoment und dem aktuellen Torsionsmoment gebildete Paar mit einer ersten Sicherheitseinhüllenden verglichen wird, die eine aus Paaren von Biegemoment-Werten und Torsionsmoment-Werten des Höhenleitwerks in einer
- Ebene gebildete Grafik repräsentiert und die so definiert ist, dass für jedes Paar solcher Werte, das außerhalb der ersten Sicherheitseinhüllenden liegt und das auf das Flugzeug wirkt, eine Gefahr des Auftretens von bleibenden Verformungen am Höhenleitwerk besteht; und
- vierten Mitteln (10), um zu-bestimmen, ob zumindest ausgehend von dem Ergebnis des ersten Vergleichs eine Strukturinspektion des Flugzeughöhenleitwerks durchgeführt werden muss.

13. Vorrichtung nach Anspruch 12,
**dadurch gekennzeichnet, dass**:

- die Vorrichtung (1) außerdem umfasst:

■ fünfte Mittel (15) zum Bestimmen einer aktuellen Schubbeanspruchung mithilfe von Informationen aus der Gruppe (2) von Informationsquellen; und
■ sechste Mittel (17) zum Durchführen eines zweiten Vergleichs, indem das von dem aktuellen Torsionsmoment und der aktuellen Schubbeanspruchung gebildete Paar mit einer zweiten Sicherheitseinhüllenden verglichen wird; und

- die vierten Mittel (10) bestimmen, ob auch ausgehend von dem Ergebnis des zweiten Vergleichs eine Strukturinspektion des Höhenleitwerks durchgeführt werden muss.

14. Vorrichtung nach einem der Ansprüche 12 und 13,
**dadurch gekennzeichnet, dass** sie außerdem siebte Mittel (12) umfasst, die dazu vorgesehen sind, einer Bedienperson gegebenenfalls anzuzeigen, dass eine Inspektion des Höhenleitwerks durchgeführt werden muss.

Fig. 1

**EP 1 607 814 B1**

**RÉFÉRENCES CITÉES DANS LA DESCRIPTION**

**Documents brevets cités dans la description**

- GB 2192723 A